# EUROPEAN PATENT SPECIFICATION

(11) **EP 2 747 324 B1**
(45) Date of publication and mention of the grant of the patent: **01.04.2015**
(21) Application number: 12306635.9
(22) Date of filing: 20.12.2012
(51) Int. Cl.: H04J 14/08, H04J 14/02

(54) **Optical network node for an optical ring network**
Optischer Netzwerkknoten für ein optisches Ringnetzwerk
N'ud de réseau optique pour réseau optique en anneau

(43) Date of publication of application: 25.06.2014
(73) Proprietor: ALCATEL LUCENT, 92100 Boulogne-Billancourt (FR)
(72) Inventor: Pointurier, Yvan, F-91620 Nozay (FR); Simonneau, Christian, F-91620 Nozay (FR)
(74) Representative: Wetzel, Emmanuelle

(56) References cited:
- US-A- 5 864 414
- CHIARONI D ET AL: "Packet OADMs for the next generation of ring networks", BELL LABS TECHNICAL JOURNAL, WILEY, CA, US, vol. 14, no. 4, 4 January 2010 (2010-01-04), pages 265-283, XP001552054, ISSN: 1089-7089, DOI: 10.1002/BLTJ.20415 [retrieved on 2010-02-23]

## Description

### Field of the invention

The invention relates to an optical network node for an optical ring network and a method of data transmission in an optical ring network.

### Background

One type of optical networks for data transmission are optical ring networks, in which a number of optical network nodes are connected via optical links in a ring structure. The optical ring network may contain only one optical ring in which one or more data signals are transmitted as optical signals in one transmission direction along this single ring. Furthermore, the optical ring network may contain furthermore a second optical ring, along which optical transmission signals are transmitted in the opposite transmission direction.

A prominent technology for transmitting data in one transmission direction along an optical ring of an optical ring network is that of wavelength-division multiplexing (WDM). In this technology of WDM, different optical signals having respective different wavelengths are transmitted in a same transmission direction along a same optical ring. Preferably, the same optical signals with their respective wavelengths may also be transmitted along a second optical ring in the opposite transmission direction. In this case, the optical ring network is a bidirectional optical ring network comprising the two optical rings.

Furthermore to using the technology of WDM, it is a prominent further approach to use also the technology of time division multiplexing (TDM). In the technology of TDM, an optical transmission signal contains successive time slots of equal length. Within each time slot, there may be transmitted a respective optical data packet. Thus, an optical TDM signal carries a respective optical data packet sequence via a respective time slot sequence.

When combining the technologies of WDM and TDM for optical data transmission, it is a preferred approach that the respective time slot sequences of the respective optical TDM signals, which have respective different wavelengths, are synchronous to each other. In other words, the respective synchronous time slot sequences are synchronous to each other in such a way, that their time slots are of equal length, and in that the beginnings and the endings of the time slots of different optical TDM signals are also synchronous to each other.

An optical data packet carrying transmission data is of a fixed duration, wherein data transmitted within the packet is preferably transmitted by modulating the signal wavelength of the respective optical signal in dependence on the transmission data. The modulation of the optical signal is carried out, by modulating the phase and/or the amplitude of the optical signal in dependence on the transmission data and in accordance with a respective modulation scheme.

One prominent candidate for such a modulation scheme is that of binary phase-shift keying (BPSK), wherein only the phase of the optical signal is modulated. A further prominent candidate for a phase modulation scheme is that of quaternary phase-shift keying (QPSK). A prominent candidate for a modulation scheme, in which the phase and the amplitude of the signal is modulated, is that of quadrature amplitude modulation (QAM).

Data transmission may be carried out, by modulating one optical signal of a specific wavelength in accordance with a modulation scheme. Furthermore, a method exploiting the technique of polarization division multiplexing (PDM) may be applied. In PDM, a first optical signal of a first wavelength and a first polarization state as well as a second optical signal of the same first wavelength but a second, orthogonal polarization state are both modulated according to the chosen modulation scheme for the purpose of data transmission.

For generating the modulated optical signal, such that an optical data packet is generated at the respective wavelength, an optical signal of the respective wavelength may be provided via a tunable laser. The laser is tunable in its wavelength. During the time slot, within which the optical data packet shall be generated, the laser is tuned to the respective wavelength, at which the optical data packet shall be generated. The optical signal of the provided wavelength, generated by the tunable laser, is then modulated in dependence on the transmission data, using a separate modulation unit, to which the signal of the laser is provided. Thus, by tuning the tunable laser to a specific wavelength, it is possible to generate an optical data packet within the respective time slot at the desired specific wavelength. In other words, the tunable laser is used to generate an optical data packet comprising transmission data of a specific wavelength. In even other words, the tunable laser and the modulation unit are used in conjunction to generate the optical data packet comprising transmission data. Thus, the modulation unit is provided with the transmission data, which shall be transmitted by means of the generated optical data packet.

When generating optical data packets for different time slots at different respective wavelengths within an optical network node, the tunable laser may be tuned to the respective desired wavelengths within the respective time slots. Preferably, for allowing the tunable laser to be tuned to the respective wavelengths within the respective time slots, the time slots may be separated by a time interval called a guard band.

Within the optical ring network, there may be one or more nodes present, which are able to add optical data packets to the optical TDM signals and also drop optical data packets from the optical TDM signals. Adding an optical data packet carrying transmission data may be desirable, in the case that the respective network node is connected also to other types of transmission networks, from which the respective network node receives transmission data that shall be propagated towards other network nodes of the optical ring network. Dropping an optical data packet at a respective network node may be desirable, in the case that the respective network node receives transmission data within a respective optical data packet, which is received from another node of the optical ring network, and which shall be propagated towards the other types of transmission networks, to which the respective network node is also connected.

When aiming at dropping an optical data packet at a network node, the network node may detect the optical data packet, in that the network node uses one or more receivers, which are fixed to respective, different wavelengths. The node then uses that fixed wavelength receiver, whose wavelength corresponds to the wavelength, at which the optical data packet is to be detected.

An alternative concept to that of using fixed receivers is that of using one or more tunable receivers. When aiming at dropping an optical data packet at a network node, the network node tunes a tunable receiver to that wavelength, at which the optical data packet is received. The tunable receiver contains preferably a tunable laser, which provides a down-mixing signal of the respective wavelength, at which the optical data packet is to be received. The tunable receiver, using the tunable laser, then detects the optical data packet by down-mixing the digital data packet from its respective wavelength, decoding transmission data from the down-mixed optical data packet and then providing the transmission data to the previously mentioned other types of transmission networks. An alternative expression for down-mixing is down-converting.

In detail, the tunable receiver uses the tunable laser and a demodulation unit in conjunction. The demodulation unit performs down-mixing of the received optical data packet, using the provided optical signal, provided by the tunable laser, for down-mixing, and furthermore performs decoding of the down-mixed optical data packet for timing received transmission data. In other words, the tunable receiver is able to detect the optical data packet at the specific wavelength.

Control information indicating for the optical data packets, which of the optical data packets shall be detected at an optical network node, may be received at the network node via a so-called control channel. Preferably, this control channel is a separate optical TDM signal carrying a respective optical data packet sequence via a respective synchronous time slot sequence. The optical data packets of the control channel signal contain information, from which an optical network node can derive whether it shall detect an optical data packet and provide transmission data decoded from the detected optical data packet towards other network nodes or other types of networks. The control channel as a separate optical TDM signal has a respective wavelength, which differs from the wavelength used for data transmission. Furthermore, in the case that a network node generates a new optical data packet comprising transmission data, the optical network node generates control information, which indicates a respective destination node or the new optical data packet. The network node does so, by preferably inserting the generated control information into an optical data packet of the control channel signal.

Another preferred solution, for receiving control information and for providing control information is that, for receiving the control information at the network node via a network management interface and also providing the generated control information at the network node towards the network management.

When aiming at adding an optical data packet into one of the optical TDM signals propagating along the optical ring network, the respective network node may block the respective optical TDM signal at the respective wavelength within that time slot, into which the network node wants to insert the new optical data packet. Then, the optical network node generates within this time slot a new optical data packet at this specific wavelength. The new optical data packet is then generated, such that it contains the transmission data that shall be inserted within the respective time slot. For generating the new optical data packet, the network node may use a tunable transmitter. The tunable transmitter contains a tunable laser, which provides an optical signal at that wavelength, at which the new optical data packet shall be generated. This provided optical signal is then modulated by a modulation unit in dependence on the transmission data to be transmitted and in accordance with the chosen modulation scheme. In other words, the tunable laser generates the new optical data packet at the specific wavelength.

For blocking an optical TDM signal within a time slot, the optical TDM signal may be provided to an optical gate, which is open during this time slot for terminating an optical data packet, which is present at this optical signal at its respective wavelength. Thus, for terminating the optical data packet within this time slot using the optical gate, another new optical data packet may be inserted, by generating the new optical data packet at this wavelength.

When transmitting different optical TDM signals of different wavelengths along an optical ring of an optical ring network, the different optical TDM signals experience different amounts of chromatic dispersions due to the different wavelengths. Thus, since a chromatic dispersion causes a respective delay to an optical signal, the different optical TDM signals experience different respective time delays during the optical transmission. Thus, in turn, the optical TDM signals are shifted in time to each other. Such different time delays may have the effect, that different optical data packets of different respective optical TDM signals but of a same initial time slot are not synchronous to each other any more. A first optical data packet of a first time slot and of a first optical TDM signal having a first wavelength may overlap in time with a second optical data packet of a second, other time slot of a second TDM signal having a second, different respective wavelength. This in turn, may have the effect, that a specific network node will not be able to detect the first optical data packet at the first wavelength and then afterwards the second data packet of the second wavelength, since the network node will not be able to tune its laser from the first wavelength to the second wavelength for detecting these optical data packets, since these optical data packets overlap in time.

It has to be taken into consideration, that two different optical TDM signals of two different wavelengths, which are transmitted at a beginning point of transmission synchronously, will experience different amounts of chromatic dispersion and thus different respective time delays, which both increase for an increasing optical transmission distance. Thus, it may be the case, that when transmitting different optical TDM signals of different wavelengths over a shorter transmission distance, the effects of chromatic dispersions and respective time delays may have only a minor effect on the different optical TDM signals, such that no optical data packets overlap in time. In the case, that the optical data transmission is carried out over a greater transmission distance, the effects of chromatic dispersion and time delay may lead to the negative effect of time overlap as previously described above.

One solution for counteracting the effects of chromatic dispersion and respective time delays on the different optical TDM signals in an optical ring network is that of using a so-called hub node. Such a hub node present within the optical ring network terminates all optical TDM signals, detects all optical data packets for obtaining the respective transmission data of the optical TDM signals and regenerates the optical TDM signals, by generating new optical data packet of respective optical TDM signals having the same respective wavelengths containing the same transmission data within the received respective optical data packets, wherein the new optical TDM signals are synchronous to each other in time. This synchronicity can be expressed, in that the time spots of the optical TDM signals are synchronous to each other, which in turn implies that also the optical data packets of the respective TDM signals are synchronous to each other. Such a solution of using a hub node requires one line card per wavelength, at which an optical TDM signal shall be regenerated. The hub node thus limits the transmission of the optical data packets without any regeneration to a transmission distance, which is one circumference of the optical ring along which the optical signals are transmitted in the optical ring network.

Document "Packet OADMs for the Next Generation of Ring Networks", Chiaroni D. et Al, Bell Labs Technical Journal 14(4), 4 January 2010, discloses a packet OADM and a packet ring network model according to the preamble of present claim 1 and 10.

### Summary

Proposed is an optical network node for an optical ring network, which counteracts the effects of different chromatic dispersions at different time delays affecting different optical TDM signals of different respective wavelengths in an improved manner.

The proposed optical network node comprises a first optical interface, at which a plurality of optical TDM signals carrying respective optical data packets via respective synchronous time slot sequences are received. The different optical TDM signals have different respective wavelengths.

Furthermore, the optical network node contains a receiver, which is able to detect an optical data packet at a detected wavelength.

The optical network node contains furthermore a control unit, which is able to receive control information. The control information indicates for each optical data packet of the same time slot the respective destination node. The control unit is furthermore able to control the receiver in dependence on the control information, for detecting the optical data packet at the respective wavelength within this same time slot.

The control unit is furthermore able to modify at least two of the received optical TDM signals within the same time slot. The control unit does so, by controlling the first optical gate for terminating a first optical data packet at a first wavelength.

The control unit furthermore controls the first tunable laser, to generate a new optical data packet comprising transmission data at the first wavelength.

The control unit furthermore controls a second optical gate to terminate a second optical data packet at a second wavelength, wherein the second wavelength is different from the first wavelength.

The control unit furthermore controls a second tunable laser to generate a new optical data packet comprising dummy data at the second wavelength.

The detected wavelength is equal to the first wavelength or equal to the second wavelength.

The node comprises furthermore a second optical interface, which is able to transmit the modified optical TDM signals into the optical ring network.
In order to grasp the advantages of the proposed optical network node, the following aspects have to be taken into consideration.

As it has been mentioned previously above, the optical TDM signals have to be prevented from being transmitted over a too long transmission distance in order to avoid an overlap of optical data packets of different optical TDM signals. Such an overlap in time may be caused by respective different time delays shifting the respective different optical signals in time, wherein the respective different time delays are caused by respective different amounts of chromatic dispersion affecting the respective different optical signals. The previously mentioned solution of a hub node regenerating all signals at all wavelengths requires one line card per wavelength, which is a costly solution. Another simple solution would be, to prevent an optical data packet from further transmission, and thus from a possible later overlap with another optical data packet of another optical TDM signal at another wavelength, by removing this optical data packet right after the detection of this optical data packet at an optical network node. In other words, an optical network node detecting the optical data packet and deriving transmission data from this optical data packet may remove this optical data packet at its respective wavelength using an optical gate. While this would bear the advantage, that the optical data packet detected at the node is prevented from further transmission along the optical ring network and also prevented from a possible later overlap with another optical data packet of another optical TDM signal at another wavelength, this also bears a further problem. This further problem is, that an absence of optical power within the time slot, within which the intended optical data packet was transmitted, may have a negative effect on optical amplifiers present along the optical ring of the network. The absence of the optical data packet after its removal may be seen as an optical power gap, during which no optical power is present within this time slot. An optical amplifier, for example an Erbium Doped Fiber Amplifier (EDFA) experiencing an optical power gap at its input during this time slot may cause undesired artefacts, such as peaks of optical power, which in turn may affect other optical data signals of other wavelengths in a negative manner.
Such a problem may arise from an optical transient causes by the power gap. In the case that the EDFA experiences a power gap at its input, the algorithms that control the pump power of the EDFA tries to reduce change pump power accordingly the input power, but it cannot be done perfectly and instantaneously. So there are some peaks or overshoots in the optical output power of the EDFA. Such peaks may accumulate along a transmission link and cannot be removed. Such peaks or overshoots will degrade a performance of the optical transmission channel.

Thus, the solution of blocking an optical data packet and thus causing an optical power gap during a time slot is of disadvantage.

The proposed optical network node is a network node, which may allow operation of an optical ring network, within which no hub node needs to be present for regenerating all optical TDM signals at all wavelengths in a synchronised manner for counteracting the negative effect of chromatic dispersion. Furthermore, the proposed optical network node may allow an operation of an optical ring network, in which optical power gaps are avoided, such that optical amplifiers located along the optical ring network may be prevented from generating ASE noise to an undesirable extent.

The way, in which the proposed optical network node achieves this, is now described in detail.

The optical network node detects an optical data packet at a specific, detected wavelength. Furthermore, the optical network node terminates a first optical data packet at a first wavelength. In the case, that the detected wavelength is equal to the first wavelength, then the new optical data packet comprising transmission data at the first wavelength can be considered as a replacement data packet for the detected optical data packet. Thus, an optical power gap within the same time slot at the detected wavelength, which is equal to the first wavelength, is avoided. Furthermore, since the second wavelength is different from the first wavelength, the optical node terminates another, second optical data packet at another, second wavelength. This second optical data packet may be a data packet that contains dummy data, as possibly indicated by the control information. For terminating this second optical data packet and generating a new optical data packet comprising dummy data at this second wavelength, the optical network node is able to generate a new optical data packet at the second wavelength, which is synchronous to the time slot and other data signal packets of this same time slot to a higher degree than the second optical data packet, that was terminated.

Thus, the optical network node may perform three things at the same time, in the case that the first wavelength is equal to the detected wavelength. The first thing is, that transmission data is received via the detected optical data packet. The second thing is, that data is transmitted via the new optical data packet comprising transmission data of the first wavelength. The third thing is, that an optical data packet is terminated at the other, second wavelength and that a new optical data packet comprising dummy data is inserted at this other, second wavelength, which is synchronous to the other data packets of the same time slot. Thus, the proposed optical network node avoids optical power gaps and furthermore achieves regeneration within this same time slot of the optical TDM signal of the second wavelength.

In the case, that not the first wavelength is equal to the detected wavelength, but that the second wavelength is equal to the detected wavelength, the optical network node acts in the following manner. While the optical data packet detected at the detected wavelength allows to receive transmission data at the network node, the second optical data packet is terminated at the second wavelength, which is equal to the detected wavelength is the received and detected optical data packet. A power gap is avoided, since the optical network node generates a new optical data packet comprising dummy data at this second wavelength, which is equal to the detected wavelength. Furthermore, the optical network node is able to transmit data at the first wavelength, which is different from the detected wavelength, by terminating the first optical data packet of the first wavelength within the same time slot and then inserting a new optical data packet of the first wavelength comprising transmission data. Thus, the optical network node avoids a power gap at the second wavelength, which is equal to the detected wavelength, and the node is also able to transmit data at the first wavelength, which is different from the detected wavelength.

### Brief description of the drawings

Figure 1 shows an optical ring network according to a preferred embodiment.
Figure 2 shows optical TDM signals.
Figure 3 shows an optical network node according to the prior art.
Figure 4 shows a proposed optical network node according to a first embodiment.
Figure 5 shows an optical network node according to a second embodiment.
Figure 6 an optical network node according to a third embodiment.
Figure 7 shows an optical network node according to a fourth embodiment.
Figures 8a to 8f show different optical data packets in a first mode of optical data transmission.
Figures 9a to 9f show different optical data packets in a second mode of optical data transmission

### Description of embodiments

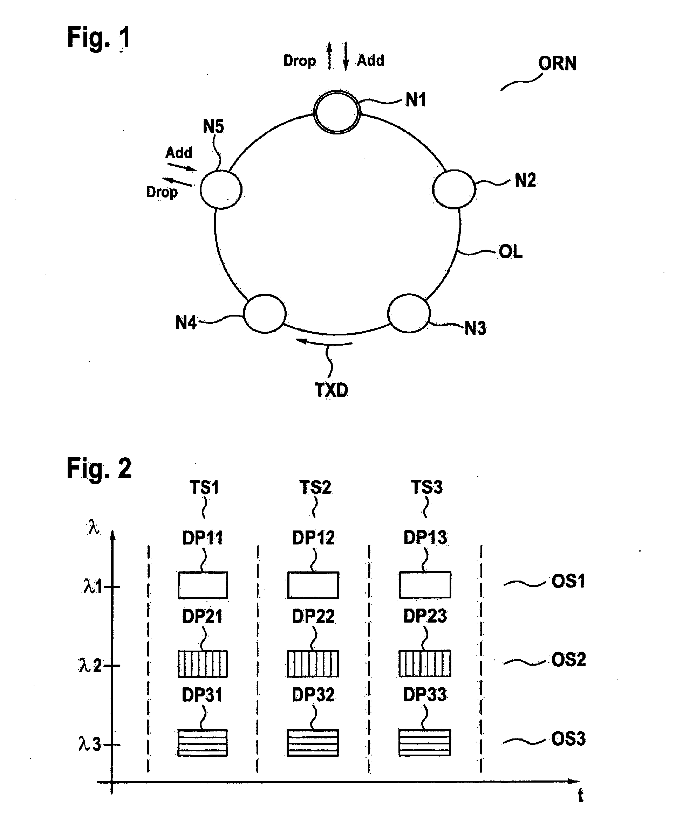

Figure 1 shows an optical ring network ORN according to a preferred embodiment. Optical network nodes N1,...,N5 are placed along an optical ring formed by the network nodes N1,...,N5, wherein optical links OL connect the nodes N1,...,N5. Optical data signals are transmitted along the shown optical ring in a transmission direction TXD. Preferably, the optical ring network ORN contains a second optical ring, not explicitly shown in Figure 1, wherein the second ring connects the nodes N1,...,N5 in a same manner as shown in Figure 1, but wherein the transmission direction is opposite to the transmission direction TXD.

In the shown example of the network ORN, the nodes N1 and N5 are nodes, which are able to add optical data packets to optical signals transmitted and are also able to drop optical data packets from the transmitted optical signals.

Along the ring of the network ORN, optical TDM signals are transmitted in a WDM manner as previously described above. Thus, the optical TDM signals carry respective optical data packet sequences within respective synchronous time slot sequences. The nodes N1 and N5 may be considered as so-called POADM nodes, wherein POADM stands for Packet Optical Add-Drop Multiplexing.

An optical link OL may be given by a single optical fibre. Preferably, an optical link OL consists of one or more fibres, which may even be connected by one or more transmission devices placed along the optical link OL.

Figure 2 shows different optical TDM signals OS1,...,OS3, which have different respective wavelengths λ1,..., λ3. The signals OS1,...,OS3 are shown over the time t.

The signal OS1 carries optical data packets DP11, DP12, DP13, which form an optical data packet sequence. The signal OS1 carries the optical data packet sequence via a respective time slot sequence TS1,...,TS3.

The optical signals OS2, OS3 also carry respective data packet sequences via respective time slot sequences, wherein the time slot sequences of the different signals OS1,...,OS3 shown in Figure 2 are synchronous to each other.

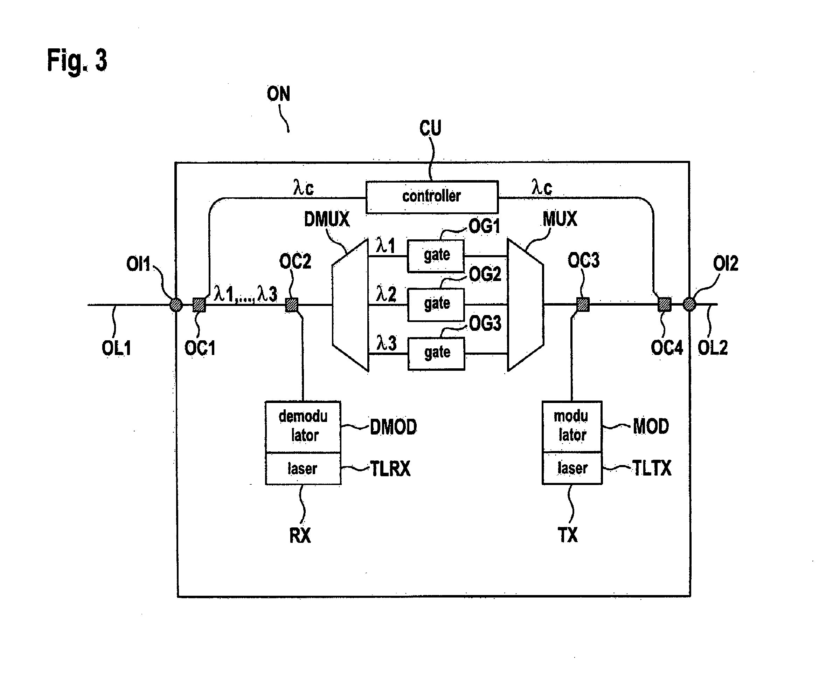

Figure 3 shows an optical node according to the prior art. The node ON contains an optical interface OI1, to which the node ON is connectible to an optical link OL1. Furthermore, the node ON contains an optical interface OI2, via which the node ON is connectible to another optical link OL2.

Optical signals OS1,...,OS3, as shown in Figure 2, are received at the interface OI1 , wherein the signals may comprise respective wavelengths λ1,..., λ3.

In the case, that the optical signals received at the interface OI1 contain an optical signal forming a control channel at a wavelength λc, this control channel signal at the wavelength λc is provided by an optical coupler OC1 to a control unit CU. In the case, that the node ON receives control information via a network management interface, not shown here explicitly in Figure 3, then the optical coupler OC1 is not present in the node ON. Furthermore, the network management interface is in this case connected to a control unit CU for exchanging control information.

Optical TDM signals received at the node ON are provided via an optical coupler OC2 to a receiver RX. The receiver RX shown in Figure 3 is a tunable receiver. Alternatively, instead of a tunable receiver RX, the node ON may contain a fixed receiver as previously mentioned above.

The tunable receiver RX contains a tunable laser TLRX, which may be tuned to one of the wavelengths of the signals received at the node ON. The receiver RX furthermore contains a demodulation unit DMOD, which demodulates an optical data packet that is to be detected at that wavelength, to which the tunable laser TLRX is tuned.

The optical TDM signals of the wavelengths λ1,..., λ3 are provided via an optical demultiplexing unit DMUX towards respective optical gates OG1,...,OG3. At an optical gate OG1, ..., OG3, a respective TDM signal of a respective wavelength λ1 ,...,λ3 may be terminated using the gate. The optical signals leaving the optical gates OG1,..., OG3 are then combined by an optical multiplexing unit MUX. The tunable laser TLRX and the optical gates OG1,..., OG3 are controllable via the control unit CU.

The signals combined by the optical multiplexing unit MUX are provided to an optical coupler OC3, which combines these signals with a transmission signal generated by a tunable transmitter TX.

The tunable transmitter TX contains a tunable laser TLTX, which is tuned to that wavelength, at which the node ON intends to generate a new optical data packet carrying transmission data. The tunable transmitter TX contains furthermore a modulation unit MOD, which modulates the optical signal, which is provided by the tunable laser TLTX, in dependence on transmission data received at the node ON and in accordance with a chosen modulation scheme. The data interface, via which the node ON receives transmission data from the transmitter TX and via which the node ON provides data, which is received via the receiver RX, is not shown explicitly in Figure 3.

In the case, that the node ON provides generated control information by means of the control unit CU to other nodes via the control channel at the wavelength λc, the control signal generated by the control unit CU at the wavelength λc is combined with further optical TDM signals using an optical coupler OC4. In the case, that the control unit CU provides control information via a network management interface to a network management, the optical coupler OC4 is not present within the node ON, while furthermore in this case the control unit is connected to the network management interface for providing such control information. The control information generated by the control unit CU indicates for an optical data packet, that is generated by the transmitter TX, a destination node of the generated and newly transmitted optical data packet.

The optical TDM signals, as well as preferably also the control channel signal of the wavelength λc, leave the optical node ON at the optical interface OI2. At this interface OI2, optical TDM signals are transmitted by the node ON into the ring network along a same transmission direction, in which the optical TDM signals are received by the optical interface OI1.

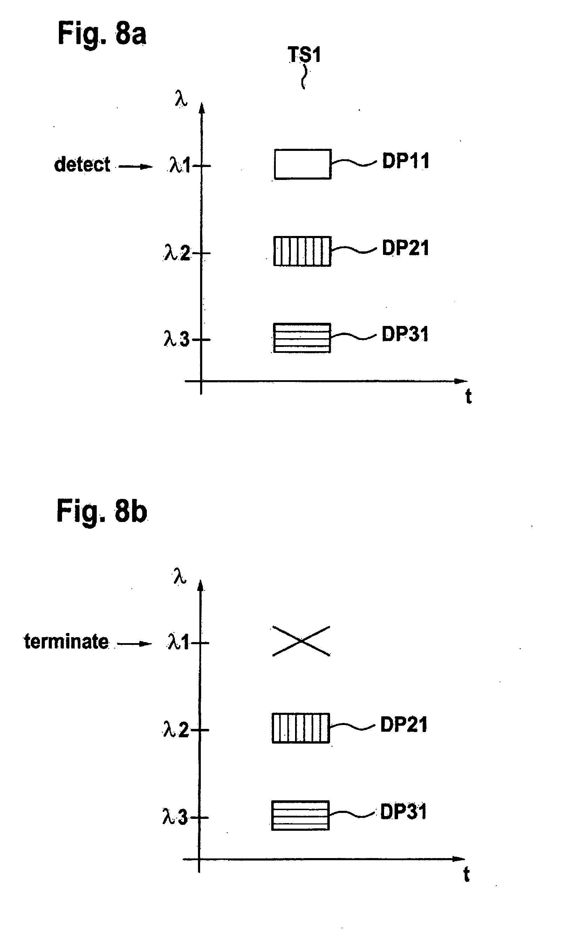

Figure 8a shows data packets DP11, DP21, DP31 of the signals OS1, OS2, OS3 within the time slot TS1, as previously shown in Figure 2.

A first mode of operation according to the prior art carried out at the node ON shown in Figure 3 is now described with regard to the Figures 8a to 8f.

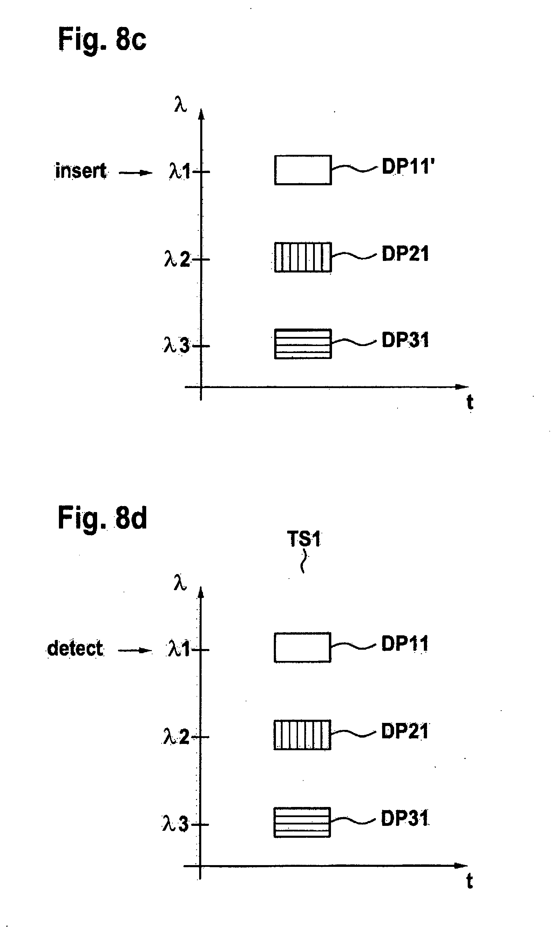

It shall be assumed, that the node ON of Figure 3 intends to detect the data packet DP11 within the time slot TS1. Thus, the node ON of Figure 3 tunes the tunable receiver RX, and in detail the tunable laser TLRX, to the wavelength λ1. In the case, that the node ON contains a fixed receiver that is able to detect a data packet at the wavelength λ1, then the node ON engages and/or activates this fixed receiver within the time slot TS1. Furthermore, the node ON of Figure 3 intends to insert a new optical data packet carrying transmission data at this same wavelength λ1. Thus, the node ON of Figure 3 terminates the optical data packet received at the wavelength λ1, as shown in Figure 8b. Even furthermore, the node ON of Figure 3 inserts a newly generated optical data packet carrying transmission data at this wavelength λ1, using the tunable laser TLTX of the tunable transmitter TX. The tunable laser TLTX shown is arranged to generate a newly generated optical data packet comprising transmission data, using also in conjunction the modulation unit MOD shown in Figure 3. The newly generated data packet comprising transmission data is the data packet DP11' shown in Figure 8c.

Looking at the Figures 8a, 8b and 8c in conjunction it becomes clear, that the data packet DP11 detected at wavelength λ1 and terminated by the optical gate OG1, shown in Figure 3, is replaced by the newly transmitted data packet DP11' shown in Figure 8c. Thus, in this mode of operation, no optical power gap is generated at the optical node due to the fact, that the newly generated and transmitted data packet DP11' of Figure 8c can be considered as a replacement packet of the detected optical data packet DP11 in terms of optical power.

Even furthermore, due to the fact that the data packet DP11 of the wavelength λ1 is terminated within the node, this data packet DP11 is prevented from being transmitted furthermore along the optical ring and thus also prevented from possibly experiencing chromatic dispersion and a resulting transmission delay, such that it would overlap with other data packets of the time slots at a later point of time. This is avoided, since a new optical data packet as the data packet DP11' is inserted, as shown in Figure 8c.

Figures 8d to 8f show different optical data packets in the case, that an optical data packet shall be detected at the wavelength λ1, while a newly-generated optical data packet shall be inserted at the wavelength λ3.

Figure 8d shows same data packets as previously described with regard to Figure 8a. The data packet DP11 shall be detected at the wavelength λ1.

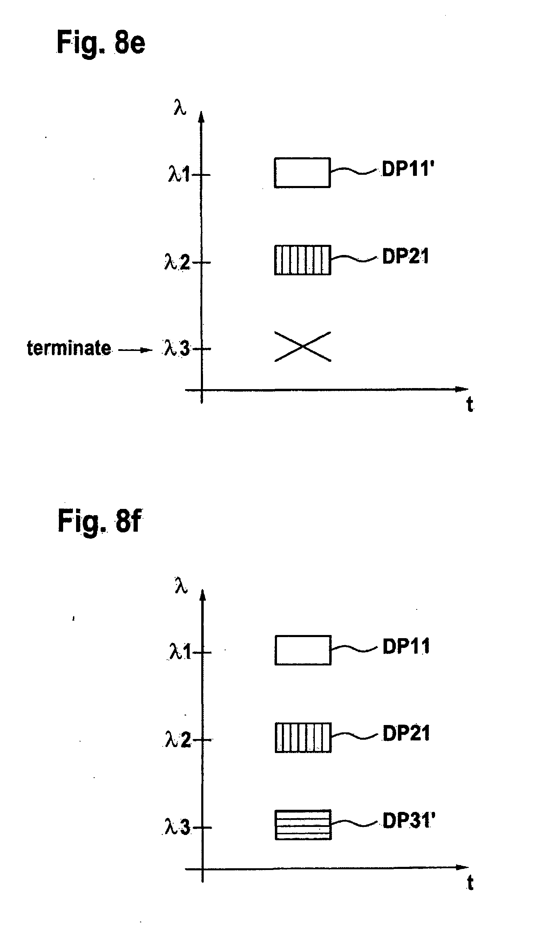

While the node does not terminate the data packet DP11, using the optical gate OG1 shown in Figure 3, and thus not generate an optical power gap at the wavelength λ1 within the time slot TS1, the node removes the data packet DP31 at the wavelength λ3. The node does so, using the optical gate OG3 shown in Figure 3, which leads to optical data packets as shown in Figure 8e.

Having removed the data packet DP31 at the wavelength λ3 shown in Figure 8d, the node is now able to insert a new optical data packet carrying transmission data DP31' at the wavelength λ3, as shown in Figure 8f.

While this mode of operation allows to avoid optical power gaps, which may possibly affect optical amplifiers of the network in a negative manner, this mode of operation according to the prior art bears the problem, that the data packet DP11 is not terminated by the node, but instead still is present, as shown in Figure 8f. Thus, the data packet DP11 propagates further along on the ring network and may overlap with other data packets of other time slots at a later point of time due to chromatic dispersion causing transmission delays.

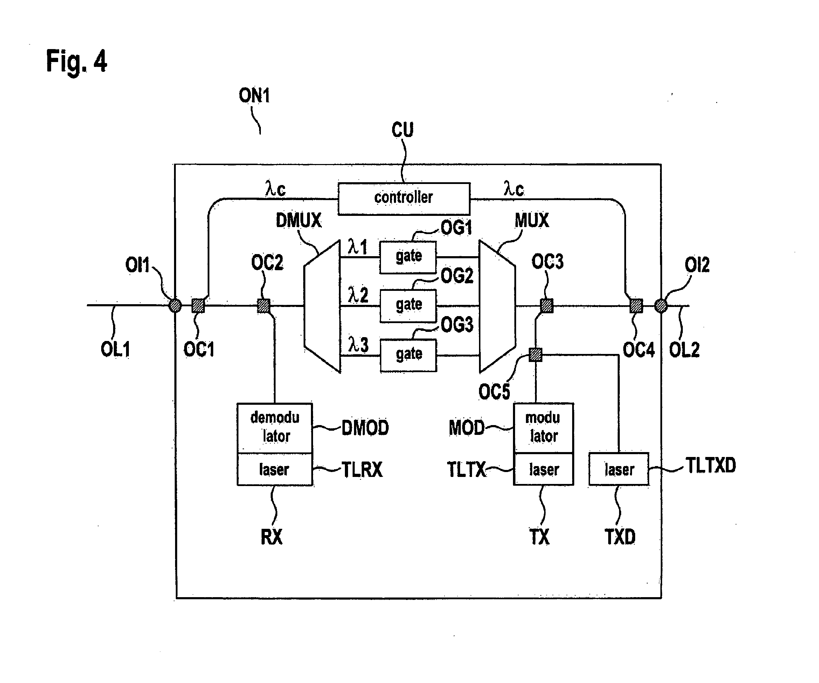

Figure 4 shows a network node ON1, which is in general equivalent to the network node ON shown in Figure 3. The network node ON1 of Figure 4 differs from the network node ON in Figure 3, in that the network node ON1 contains in addition to the tunable transmitter TX a further tunable transmitter TXD. The tunable transmitter TXD is a tunable transmitter, which is able to generate an optical data packet comprising dummy data. The tunable transmitter TXD is optically coupled via one or more optical couplers OC5, OC3, OC4 to the optical interface OI2. In other words, both the transmitter TX and the tunable transmitter TXD are optically coupled to the optical interface OI2, at which signals may be transmitted in the transmission direction of the ring network.

The tunable transmitter TXD contains a tunable laser TLTXD. The control unit CU is able to control the tunable laser TLTXD, such that it is tuned to a specific wavelength.

The tunable laser TLTX contains an optical gate, not shown explicitly in Figure 4, which controls those time instances, at which an optical signal provided by the tunable laser TLTX is inserted into a time slot. Furthermore, the tunable laser TLTXD contains an optical gate, not shown explicitly in Figure 4, which controls those time instances, at which an optical signal provided by the tunable laser TLTXD is inserted into a time slot. These gates are controlled by the control unit CU.

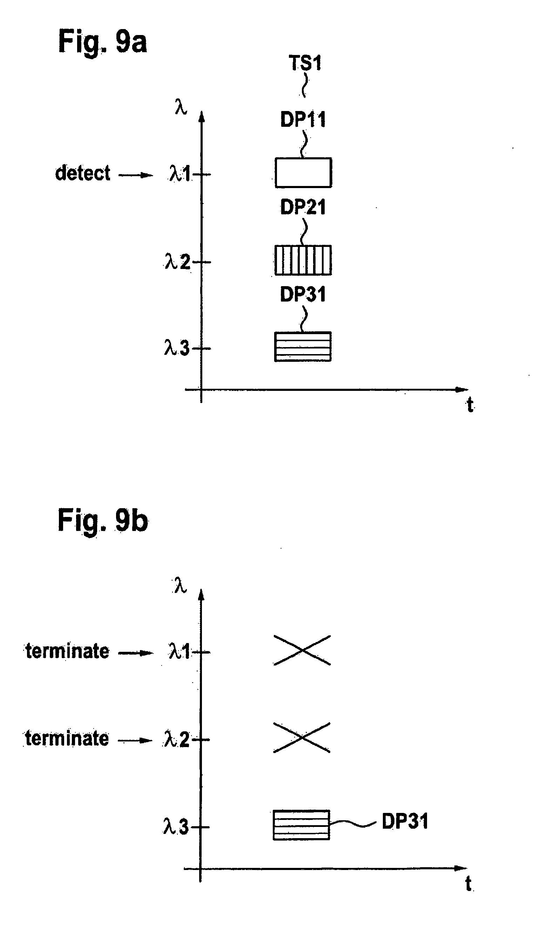

The network node ON1 of Figure 4 differs furthermore from the network node ON of Figure 3, in that the control unit CU operates in a second operation mode, which will be described in detail now with regard to Figures 9a to 9f.

Figure 9a shows data packets that are received at the node ON1 of Figure 4, wherein these data packets are equal to the data packets previously described with regard to Figure 8a. According to Figure 9a, the data packet DP11 shall be detected at the wavelength λ1.

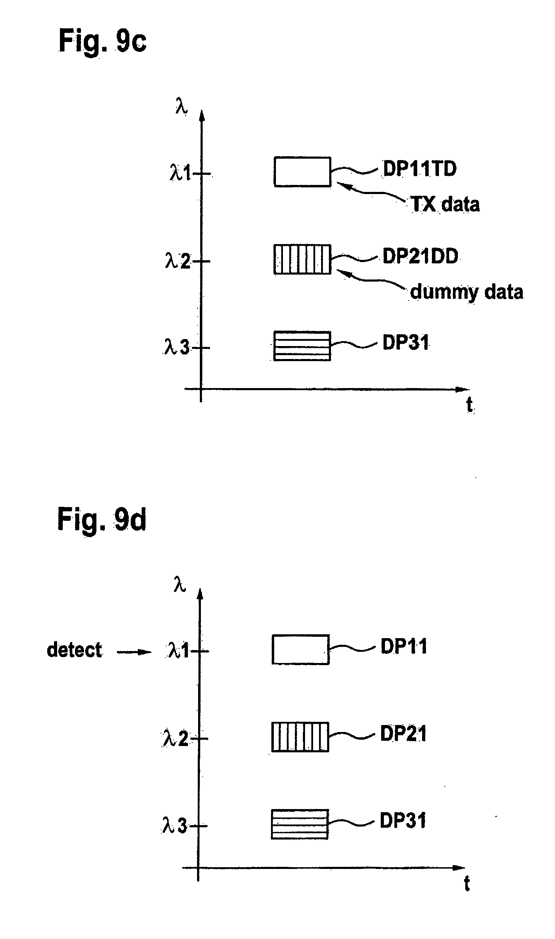

In the second operation mode, a first sub-mode of operation is carried out by the control unit CU, shown in Figure 4. This first sub-mode is now described with regard to Figures 9b and 9c. In this first sub-mode, the control unit terminates a first optical data packet at a first wavelength using a first optical gate, wherein the first wavelength is equal to the detected wavelength, in this example the wavelength λ1. Thus, the control unit CU, shown in Figure 4, uses the optical gate OG1 for terminating the packet DP11 at the wavelength λ1.

Furthermore, the control unit CU terminates a second optical data packet at a second wavelength. In this example, the second wavelength is the wavelength λ2, such that the second optical data packet that is terminated is the data packet DP21 shown in Figure 9a. This is depicted in Figure 9b. For terminating the second optical data packet DP21, the control unit CU shown in Figure 4 uses in this example the optical gate OG2.

Further steps of the first sub-mode are now described in detail. The control unit CU of Figure 4 controls the tunable laser TLTX of the transmitter TX, such that a new optical data packet comprising transmission data is generated at the first wavelength, which is in this example the wavelength λ1 shown in Figure 9c. Thus, a generated new optical data packet DP11 DD, shown in Figure 9c, fills a possible optical power gap, which was caused by the termination of the data packet DP11 shown in Figure 9a.

Furthermore, the control unit CU controls the tunable laser TLTXD of the transmitter TXD, such that a new optical data packet comprising dummy data is generated at the second wavelength, which is the wavelength λ2 shown in Figure 9c. Thus, a new optical data packet DP21 DD containing dummy data fills a possible power gap caused by the termination of the data packet DP21 shown in Figure 9a.

The generation of the dummy data packet DP21 DD of Figure 9c is achieved, in that the control unit CU of Figure 4 tunes the tunable laser TLTXD to wavelength λ2, at which the data packet containing dummy data shall be generated. The optical signal generated by the tunable laser TLTXD is in this example not modulated by any modulation scheme, but only controlled by the previously mentioned optical gate, which controls those time instances, at which the optical signal provided by the tunable laser TLTXD shall be inserted into a time slot as a dummy data packet. Furthermore, the control unit CU generates control information, which marks the data packet DPP21 DD of Figure 9c as a data packet containing dummy data. This control information may be generated by the control unit CU and then inserted into an optical data packet of the control channel. Alternatively, the control unit CU may generate this control information and provide it via a network management interface not explicitly shown in Figure 4 to a network management.

With regard to the Figures 9a to 9c, the first sub-mode of operation proposed herein has been described in detail. The detected wavelength in this case is equal to the first wavelength, while the second wavelength was different from the detected wavelength. What is achieved in this first sub-mode of the operation proposed herein, is that the detected data packet DP11 of Figure 9a is terminated and then the possible optical power gap is avoided, due to the fact that the node inserts the data packet DP11 TD containing data transmission data, as shown in Figure 9c. Furthermore, the node achieves, that the packet DP21 in Figure 9a is terminated. This data packet DP21 is preferably terminated, due to the fact that the control unit CU of Figure 4 derives from provided control information, that the data packet DP21 of Figure 9a is a data packet that contains dummy data. This data packet DP21 of Figure 9a is then replaced by a new data packet containing dummy data, which is the data packet DP21 DD of Figure 9c, which allows to have a new data packet DP21 DD at the wavelength λ2, such that the optical signal transmitted at the wavelength λ2 is regenerated within the time slot TS1.

Figures 9d to 9f show a second sub-mode of operation proposed herein, in which the second wavelength is equal to the detected wavelength, which in this example is the wavelength λ1. The data packets shown in Figure 9d are equal to the data packets previously described with regard to Figure 9a. The control unit CU shown in Figure 4 controls the optical gates OG1 and OG2 for terminating the data packet DP11 and the data packet DP21. In detail, in this example the first optical gate terminating a first optical data packet of the first wavelength is the optical gate OG2 terminating the data packet DP21 of Figure 9d at the wavelength λ2. Furthermore, a second optical gate OG1 is controlled by the control unit CU to terminate a second optical data packet at the second wavelength, which in this example is the optical data packet DP11 shown in Figure 9d, and wherein in this example the second wavelength is the wavelength λ1.

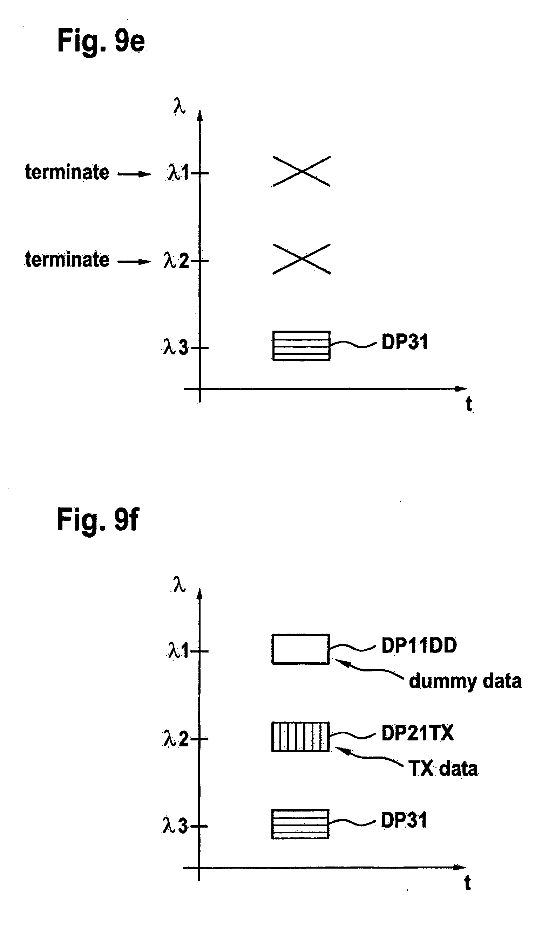

As shown in Figure 9e, the data packets at the wavelengths λ1 and λ2 are terminated in this second sub-mode of operation.

Furthermore, in this second sub-mode of operation, the control unit CU controls a first tunable laser TXD to generate a new optical data packet D21TX comprising transmission data, shown in Figure 9f, at the first wavelength λ2. Furthermore, the control unit CU of Figure 4 controls a second tunable laser TLTX of the transmitter TX to generate a new optical data packet DP11 DD at the second wavelength λ1 comprising dummy data, as shown in Figure 9f. The dummy data packet DP11 DD shown in Figure 9f is generated, using the tunable laser TLTXD and the optical gate of the transmitter TXD, as previously described with regard to Figure 4. Furthermore, the control unit CU controls the tunable laser TLTX for generating the new optical data packet D21TX containing transmission data, shown in Figure 9f, in conjunction with the modulator MOD of the transmitter TDX as previously described with regard to Figure 4.

What is achieved in this second sub-mode operation described with regard to the Figures 9d, 9e and 9f are two things. Firstly, the detected data packet DP11 of Figure 9d is terminated and thus kept from propagating further on through the ring network, since due to such further propagation the data packet DP11 may be subject to further chromatic dispersion causing a time delay of the data packet DP11, which in turn may lead to an overlap of this data packet DP11 with other data packets of other time slots. Secondly, the possible optical power gap resulting from the termination of the data packet DP11 is avoided. As shown in Figure 9f, this possible optical power gap is filled with the dummy data packet DP11 DD. Thirdly, it is achieved that the generated data packet DP21TX of the wavelength λ2 may carry transmission data, as shown in Figure 9f.

With regard to the Figures 9a to 9f, two different sub-modes of operation have been described herein, which together form the proposed mode of operation, under which the control unit CU of the node ON1 shown in Figure 4 controls the optical gates OG1,...,OG3, the receiver RX, and the tunable lasers TLTX and TLTXD of the tunable transmitters TX and TXD. In the first sub-mode of operation, the first wavelength is equal to the detected wavelength, in this example λ1, while in the second sub-mode of operation, the second wavelength is equal to the detected wavelength, in this example the wavelength λ1.

Preferably, the control unit CU of Figure 4 is able to choose the second wavelength in dependence on received control information. As previously mentioned, the control information indicates for each data packet of a time slot the respective destination node. From this control information, the control unit CU may derive, which data packet already reached its destination node and should then be terminated, for further propagation along the ring network. In other words, by terminating the data packet at the second wavelength, and then inserting an optical data packet containing dummy data, the control unit CU is able to re-synchronise the respective time slot at the second wavelength.

In detail, the control unit CU derives from the control information for each optical data packet of this time slot a respective transmission distance over which the optical data packet was transmitted before reaching the node. Furthermore, the control unit CU derives the second wavelength in dependence on the derived respective transmission distances. This bears the advantage, that the control unit may consider the determined transmission distances of the respective optical data packets for choosing one of the optical data packets, which travelled over a transmission distance that exceeds a predefined threshold.

Preferably, the control unit CU chooses the second wavelength to that wavelength, at which the respective optical data packet travelled over a respective determined largest transmission distance. This has the advantage, that the control unit CU chooses the second wavelength such that the optical data packet, which travelled the greatest distance, is removed.

Coming back to Figure 4, the optical data packet carrying dummy data is generated, in that the tunable laser TLTXD generates an unmodulated optical wavelength signal at the second wavelength, and wherein the node ON1 inserts this unmodulated optical wavelength signal as the new optical data packet comprising dummy data. This may be carried out in detail, in that the optical gate controls an emission of the generated unmodulated optical wavelength signal from the laser TLTXD. Preferably, the optical gate turns an emission on within the mentioned time slot.

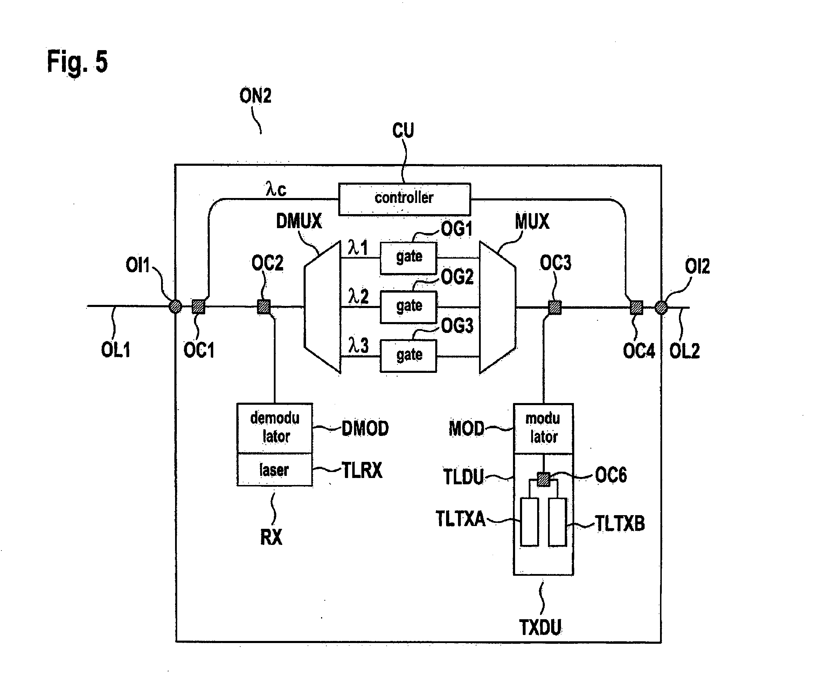

Figure 5 shows a further embodiment of the optical node ON2, which is in general equal to the optical node ON1 shown in Figure 4. The node ON2 of Figure 5 differs from the node ON1 in Figure 4, in that the transmitters TX and TXD of the node ON1 of Figure 4 are provided as a dual transmitter TXDU within the node ON2 of Figure 5.

The dual transmitter TXDU contains a dual laser TLDU. This dual laser TLDU is tunable. The laser TLDU contains one tunable laser TLTXA, which generates a first unmodulated optical wavelength signal at the first wavelength. Furthermore, the laser TLDU contains a second tunable laser TLTXB, which generates a second unmodulated optical wavelength at the second wavelength. The tunable lasers TLTXA and TLTXB are both optically coupled via an optical coupler OC6 to a same modulation unit MOD. The modulation unit MOD modulates the first and the second unmodulated optical wavelength signals in dependence on same transmission data. Thus, the generated optical data packets at the first and second wavelength contain the same data. For causing the optical data packet at the first wavelength of the laser TLTXA to be an optical data packet carrying transmission data, the control unit provides control information, which indicates that the new optical data packet at the first wavelength comprises transmission data. Furthermore, for causing the optical data packet generated at the second wavelength of the laser TLTXB to be an optical data packet carrying dummy data, the control unit CU provides control information, which indicates that the new optical data packet of the second wavelength comprises dummy data. The control unit CU provides this control information as previously described with regard to the Figures 3 and 4.

The advantage of the proposed dual laser TXDU is, that the tunable laser TLXA of the first wavelength and the tunable laser TLXB of the second wavelength may be integrated in a same dual laser TLDU.

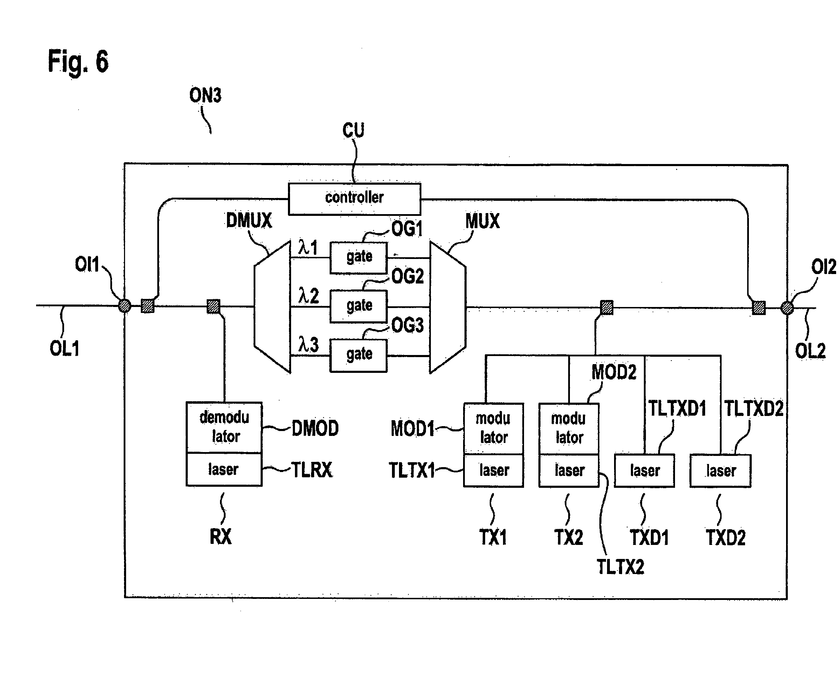

Figure 6 shows a further embodiment of the optical network node ON3, which is in general equivalent to the node ON1 of Figure 4. The node ON3 in Figure 6 differs from the node ON1 in Figure 4 in that the node ON3 contains M=2 transmission units TX1 and TX2, which are both able to generate optical data packets carrying transmission data. The transmitters TX1 and TX2 are similar in structure to the transmitter TX of Figure 4.

Furthermore, the node ON3 of Figure 6 contains M=2 transmitters TXD and TXD2, which are similar in structure to the transmitter TXD of the node ON 1 shown in Figure 4.

In other words, the node ON3 contains M first tunable lasers TLTX1, TLTX2, which are able to generate respective new optical data packets comprising transmission data at respective first wavelengths. Furthermore, the node ON3 contains M second tunable lasers TLTXD1 and TLTXD2, which are able to generate respective new optical data packets comprising dummy data at the respective wavelengths.

In even other words, the number of the first tunable lasers TLTX1 and TLTX2 is equal to M. The exact value of M=2 is chosen only as an example in this embodiment and shall only be a non-limiting example. It has to be noted, that the number of the second tunable lasers TLTXD1 and TLTXD2 is equal to the number of the first tunable lasers TLTX1 and TLTX2, which is M, wherein M is an integer number greater than 1.

The control unit CU is able to carry out the second mode of operation with the two sub-modes as previously described with regard to the Figures 9a to 9f. Futhermore, the control unit CU is able to modify a number of 2M received optical TDM signals within a same time slot, as it will be described in detail now herein.

It shall now be assumed, that the node ON3 intends to generate k new data packets carrying transmission data within a same time slot, wherein k<M.

The control unit CU controls k first optical gates for terminating k respective first optical data packets at respective k different first wavelengths. Furthermore, the control unit CU controls the k of the M first tunable lasers TLTX1 and TLTX2 for generating respective k new optical data packets comprising transmission data at respective k first wavelengths.

The second optical interface OI2 is able to transmit the time slot within which the k first optical data packets are transmitted their first respective and different wavelengths. Thus, the node ON3 of Figure 6 is able to transmit data in the same time slot at k different first wavelengths. Thus, only k of the M first tunable lasers TLTX1 and TLTX2 have been used so far for generating optical data packets. Thus, M-k of the M first tunable lasers TLTX1 and TLTX2 have not been used yet for generation of optical data packets. In addition, the M second tunable lasers TLTXD1 and TLTXD2 have not been used yet for a generation of optical data packets comprising dummy data. Therefore, 2M-k of the first and second tunable lasers have not been used yet for a generation of optical data packets.

The control unit CU determines from the control data, how many of the received data packets within the same time slot contain dummy data. It shall be assumed, that this determined number is k'.

In the case, that k'<=2M-k, then the control unit CU
- terminates the k' received optical data packets containing dummy data, using k' of the optical gates OG1, ..., OG2,
- controls k' of the remaining 2M-k first and/or second tunable lasers TLTX1, TLTX2, TLTXD1, TLTXD2 for generating respective k' new optical data packets comprising dummy data at the respective k' wavelengths
- and generates control information, which indicates the k' new optical data packets as data packets containing dummy data.

In the case, that k'>2M-k, then the control unit CU
- determines those 2M-k received optical data packets, which have been transmitted over a longest transmission distance, using the control information,
- terminates the 2M-k determined received optical data packets containing dummy data, using 2M-k of the optical gates OG1, ..., OG2,
- controls the remaining 2M-k first and/or second tunable lasers TLTX1, TLTX2, TLTXD1, TLTXD2 for generating respective 2M-k new optical data packets comprising dummy data at the respective 2M-k wavelengths
- and generates control information, which indicates the 2M-k new optical data packets as data packets containing dummy data.
The advantage of this proposed mode of operation is, that the node ON3 regenerates a maximized number of received optical data packets, by replacing these received optical data packets with new optical data packets containing dummy data.

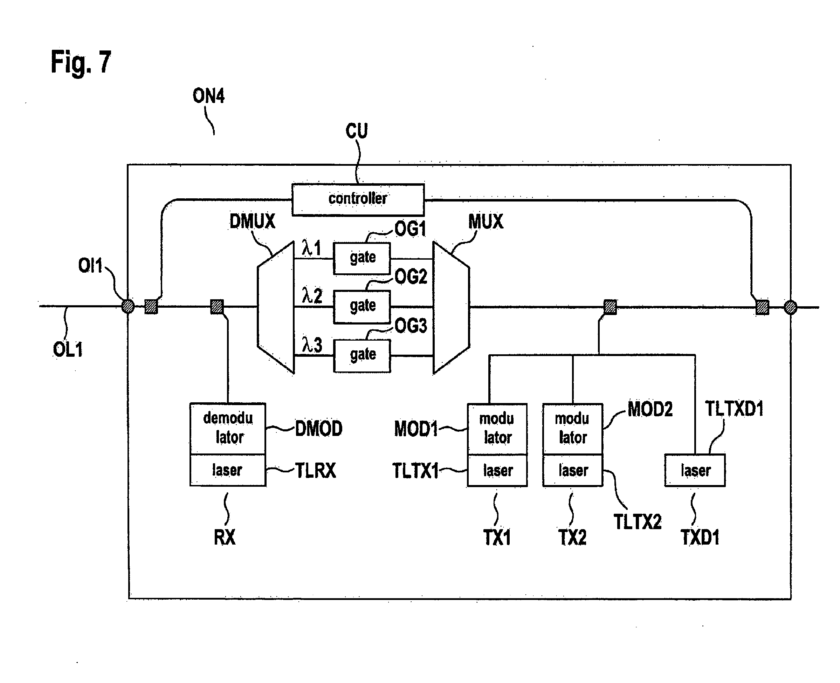

Figure 7 shows a further embodiment of a network node ON4, which is in general similar in structure to the node ON3 shown previously with regard to Figure 6.

The difference between the node ON4 of Figure 7 and the node ON3 of Figure 6 is, that the number of first tunable lasers TLTX1 and TLTX2 is equal to M=2, wherein the value of M=2 is an example, while the number of second tunable lasers TLTXD1 is smaller than the number of the first tunable lasers TLTX1, TLTX2.

The number of the second tunable lasers TLTXD1 may be considered as a number N, wherein N is an integer number smaller than M. In this example, N=1, such that there is one second tunable laser TLTXD1.

The control unit CU controls M first optical gates and the M first tunable lasers TLTX1 and TLTX2 for generating respective new optical data packets at respective wavelengths within a same time slot. Then, these M new optical data packets are transmitted within the mentioned time slot. It shall now be assumed, that these M new optical data packets are not removed by other nodes of the ring network, such that the node ON4 receives these M new optical data packets in a further time slot at a later point of time.

The first optical interface OI1 is able to receive the M new optical data packets at the M respective different first wavelengths within a further same time slot at a later point of time.

The control unit CU is furthermore able to modify the received optical TDM signals within this further same time slot. The control unit CU does so, by controlling N second optical gates for terminating N of the M new optical data packets comprising transmission data at respective N of the M first wavelengths. Furthermore, the control unit CU controls the N second tunable lasers TLTXD1, for generating respective N new optical data packets comprising dummy data at the respective N first wavelengths.

The second optical interface ON2 is furthermore able to transmit the modified further optical TDM signals.

The functioning of the proposed node ON4 is such, that the node ON4 may generate M new optical data packets comprising transmission data at respective M first wavelengths, while later on the node may replace these M new optical data packets comprising transmission data by new optical data packets comprising dummy data, wherein all of the M new optical data packets comprising transmission data may be terminated and replaced by optical data packets comprising dummy data after a certain amount of time. The amount of time is one, after which at least one of the new optical data packets propagated along the circumference of the optical ring network more than once. In the case, that M=2 and N = 1, an optical data packet comprising transmission data may be finally removed after it propagated maximally M=2 times along the circumference of the optical ring of the optical ring network.

## Claims

1. Optical network node for an optical ring network, comprising
- a first optical interface (OI1), operable to receive a plurality of optical time division multiplexed (TDM) signals carrying respective optical data packet sequences via respective synchronous time slot sequences, wherein said optical TDM signals have different respective wavelengths,
- a receiver (RX), operable to detect an optical data packet at a detected wavelength within a time slot (TS1),
- a control unit (CU), operable to receive control information indicating for each optical data packet of said same time slot (TS1) a respective destination node, and furthermore operable to control said receiver (RX) in dependence on said control information for detecting said optical data packet at said detected wavelength within said same time slot (TS1) **characterized in that**, said control unit (CU) is furthermore operable to modify at least two of said optical TDM signals within said same time slot (TS1), by controlling
- a first optical gate (OG1) to terminate a first optical data packet (DP11) at a first wavelength,
- a first tunable laser (TLTX) to generate a new optical data packet (DP11') comprising transmission data at said first wavelength,
- a second optical gate (OG3) to terminate a second optical data packet (DP31) at a second wavelength, which is different from said first wavelength,
- a second tunable laser (TLTXD) to generate a new optical data packet (DP31') comprising dummy data at said second wavelength,
wherein said detected wavelength is equal to said first wavelength or equal to said second wavelength,
and wherein said node (ON1) comprises furthermore a second optical interface (OI2), operable to transmit the modified optical TDM signals.

2. Optical network node according to claim 1,
wherein said detected wavelength is equal to said first wavelength.

3. Optical network node according to claim 1,
wherein said detected wavelength is equal to said second wavelength.

4. Optical network node according to claim 1,
wherein said control unit (CU) is furthermore operable to generate control information which indicates, that said new optical data packet comprising dummy data is an optical data packet comprising dummy data.

5. Optical network node according to claim 2,
wherein said control unit (CU) is operable to choose said second wavelength in dependence on said control information.

6. Optical network node according to claim 5,
wherein said control unit (CU) is operable to
- derive from said control information for each optical packet of said same time slot a respective transmission distance over which the respective optical packet was transmitted before reaching said node, and to
- choose said second wavelength in dependence on the derived respective transmission distances.

7. Optical network node according to claim 6,
wherein said control unit (CU) chooses said second wavelength to that wavelength, at which the respective optical data packet has a largest determined transmission distance.

8. Optical network node according to claim 1,
wherein said second tunable laser (TLTXD) generates an unmodulated optical wavelength signal at said second wavelength, and wherein said node inserts said unmodulated optical wavelength signal as said new optical data packet comprising dummy data.

9. Optical network node according to claim 1,
wherein said first tunable laser (TLTXA) generates a first unmodulated optical wavelength signal at said first wavelength,
wherein said second tunable laser (TLTXB) generates a second unmodulated optical wavelength signal at said second wavelength,
wherein said first tunable laser (TLTXA) and said second tunable laser (TLTXB) are both optically coupled to a same modulation unit (MOD), which modulates said first and said second unmodulated optical wavelength signals in dependence on same transmission data,
and wherein said control unit (CU) provides control information, which indicates that said new optical data packet comprising dummy data actually comprises dummy data and not transmission data.

10. Method of optical data transmission in an optical ring network, comprising
- receiving a plurality of optical time division multiplexed (TDM) signals carrying respective optical data packet sequences via respective synchronous time slot sequences, wherein said optical TDM signals have different respective wavelengths, using a first optical interface (OI1),
- detecting an optical data packet at a detected wavelength within a time slot (TS1), using a receiver (RX),
- receiving, at a control unit (CU), control information indicating for each optical data packet of said same time slot (TS1) a respective destination node,
- controlling said receiver (RX) in dependence on said control information, for detecting an optical data packet at a respective detected wavelength within said time slot (TS1), using said control unit (CU) **characterized by**,
- modifying at least two of said optical TDM signals within said same time slot (TS1), by controlling via said control unit (CU)
- a first optical gate (OG1) to terminate a first optical data packet (DP11) at a first wavelength,
- a first tunable laser (TLTX) to generate a new optical data packet (DP11') comprising transmission data at said first wavelength,
- a second optical gate (OG3) to terminate a second optical data packet (DP31) at a second wavelength, which is different from said first wavelength,
- a second tunable laser (TLTXD) to generate a new optical data packet (DP31') comprising dummy data at said second wavelength,
wherein said detected wavelength is equal to said first wavelength or equal to said second wavelength,
and transmitting the modified optical TDM signals, using a second optical interface (OI2).

11. Method according to claim 10,
wherein said detected wavelength is equal to said first wavelength.

12. Method according to claim 10,
wherein said detected wavelength is equal to said second wavelength.

13. Method according to claim 10,
comprising furthermore
- generating control information which indicates, that said new optical data packet comprising dummy data is an optical data packet comprising dummy data, using said control unit (CU).

## Patentansprüche

1. Optischer Netzwerkknoten für ein optisches Ringnetzwerk, umfassend:
- Eine erste optische Schnittstelle (OI1), betreibbar für den Empfang einer Vielzahl von optischen zeitgemultiplexten bzw. TDM-Signalen, welche jeweils optische Datenpaketsequenzen über jeweilige synchrone Zeitschlitzsequenzen transportieren, wobei die besagten optischen TDM-Signale jeweils unterschiedliche Wellenlängen aufweisen,
- einen Empfänger (RX), betreibbar, um ein optisches Datenpaket bei einer detektierten Wellenlänge innerhalb eines Zeitschlitzes (TS1) zu erkennen,
- eine Steuereinheit (CU), betreibbar für den Empfang von Steuerinformationen, welche für jedes optische Datenpaket des besagten selben Zeitschlitzes (TS1) einen jeweiligen Zielknoten anzeigen, und weiterhin betreibbar für die Steuerung des besagten Empfängers (RX) in Abhängigkeit von den besagten Steuerinformationen, um das besagte optische Datenpaket bei der besagten detektierten Wellenlänge innerhalb des besagten selben Zeitschlitzes (TS1) zu erkennen,
**dadurch gekennzeichnet, dass** die besagte Steuereinheit (CU) weiterhin betreibbar ist, um zumindest zwei der besagten optischen TDM-Signale innerhalb des besagten selben Zeitschlitzes (TS1) zu modifizieren, indem sie steuert:
- ein erstes optisches Gate (OG1), um ein erstes optisches Datenpaket (DP11) bei einer ersten Wellenlänge zu beenden,
- einen ersten abstimmbaren Laser (TLTX), um ein neues optisches Datenpaket (DPI11'), welches Übertragungsdaten enthält, bei der besagten ersten Wellenlänge zu erzeugen,
- ein zweites optisches Gate (OG3), um ein zweites optisches Datenpaket (DP31) bei einer zweiten Wellenlänge, welche sich von der besagten ersten Wellenlänge unterscheidet, zu beenden,
- einen zweiten abstimmbaren Laser (TLTXD), um ein neues optisches Datenpaket (DP31'), welches Fülldaten enthält, bei der besagten zweiten Wellenlänge zu erzeugen,
wobei die besagte detektierte Wellenlänge gleich der besagten ersten Wellenlänge oder gleich der besagten zweiten Wellenlänge ist,
und wobei der besagte Knoten (ON1) weiterhin eine zweite optische Schnittstelle (OI2) umfasst, welche für die Übertragung des modifizierten optischen TDM-Signals betreibbar ist.

2. Optischer Netzwerkknoten nach Anspruch 1,
wobei die besagte detektierte Wellenlänge gleich der besagten ersten Wellenlänge ist.

3. Optischer Netzwerkknoten nach Anspruch 1,
wobei die besagte detektierte Wellenlänge gleich der besagten zweiten Wellenlänge ist.

4. Optischer Netzwerkknoten nach Anspruch 1,
wobei die besagte Steuereinheit (CU) weiterhin betreibbar ist, um Steuerinformationen zu erzeugen, die anzeigen, dass das besagte neue optische Datenpaket, welches Fülldaten enthält, ein optisches Datenpaket mit Fülldaten ist.

5. Optischer Netzwerkknoten nach Anspruch 2,
wobei die besagte Steuereinheit (CU) betreibbar ist, um die besagte zweite Wellenlänge in Abhängigkeit von den besagten Steuerinformationen zu wählen.

6. Optischer Netzwerkknoten nach Anspruch 5,
wobei die besagte Steuereinheit (CU) für Folgendes betreibbar ist:
- Ableiten, für jedes optische Paket des besagten selben Zeitschlitzes, einer jeweiligen Übertragungsentfernung, über welche das jeweilige optische Paket vor Erreichen des besagten Knotens übertragen wurde, von den besagten Steuerinformationen, und
- Wählen der besagten zweiten Wellenlänge in Abhängigkeit von den abgeleiteten jeweiligen Übertragungsentfernungen.

7. Optischer Netzwerkknoten nach Anspruch 6,
wobei die besagte Steuereinheit (CU) als die besagte zweite Wellenlänge eine Wellenlänge wählt, bei der das jeweilige optische Datenpaket eine weiteste bestimmte Übertragungsentfernung hat.

8. Optischer Netzwerkknoten nach Anspruch 1,
wobei der besagte zweite abstimmbare Laser (TLTXD) ein unmoduliertes optisches Wellenlängensignal bei der besagten zweiten Wellenlänge erzeugt, und wobei der besagte Knoten das besagte unmodulierte optische Wellenlängensignal als das besagte neue optische Datenpaket, welches Fülldaten enthält, einfügt.

9. Optischer Netzwerkknoten nach Anspruch 1,
wobei der besagte erste abstimmbare Laser (TLTXA) ein erstes unmoduliertes optisches Wellenlängensignal bei der besagten ersten Wellenlänge erzeugt,
wobei der besagte zweite abstimmbare Laser (TLTXB) ein zweites unmoduliertes optisches Wellenlängensignal bei der besagten zweiten Wellenlänge erzeugt,
wobei der besagte erste abstimmbare Laser (TLTXA) und der besagte zweite abstimmbare Laser (TLTXB) beide optisch an eine selbe Modulationseinheit (MOD) gekoppelt sind, welche das besagte erste und das besagte zweite unmodulierte optische Wellenlängensignal in Abhängigkeit von denselben Übertragungsdaten moduliert,
und wobei die besagte Steuereinheit (CU) Steuerinformationen bereitstellt, welche anzeigen, dass das besagte neue optische Datenpaket, welches Fülldaten enthält, tatsächlich Fülldaten und keine Übertragungsdaten enthält.

10. Verfahren zur optischen Datenübertragung in einem optischen Ringnetzwerk, umfassend:
- Empfangen einer Vielzahl von optischen zeitgemultiplexten bzw. TDM-Signalen, welche jeweils optische Datenpaketsequenzen über jeweilige synchrone Zeitschlitzsequenzen transportieren, wobei die besagten optischen TDM-Signale jeweils unterschiedliche Wellenlängen aufweisen, unter Verwendung einer ersten optischen Schnittstelle (OI1),
- Erkennen eines optischen Datenpakets bei einer detektierten Wellenlänge innerhalb eines Zeitschlitzes (TS1) unter Verwendung eines Empfängers (RX),
- Empfangen, an einer Steuereinheit (CU), von Steuerinformationen, welche für jedes optische Datenpaket des besagten selben Zeitschlitzes (TS1) einen jeweiligen Zielknoten anzeigen,
- Steuern des besagten Empfängers (RX) in Abhängigkeit von den besagten Steuerinformationen, um ein optisches Datenpaket bei einer jeweiligen detektierten Wellenlänge innerhalb des besagten Zeitschlitzes (TS1) zu erkennen, unter Verwendung der besagten Steuereinheit (CU),
gekennzeichnet durch:
- Modifizieren von mindestens zwei der besagten optischen TDM-Signale innerhalb des besagten selben Zeitschlitzes (TS1) durch Steuern, über die besagte Steuereinheit (CU):
- eines ersten optischen Gates (OG1), um ein erstes optisches Datenpaket (DP11) bei einer ersten Wellenlänge zu beenden,
- eines ersten abstimmbaren Lasers (TLTX), um ein neues optisches Datenpaket (DPI11'), welches Übertragungsdaten enthält, bei der besagten ersten Wellenlänge zu erzeugen,
- eines zweiten optischen Gates (OG3), um ein zweites optisches Datenpaket (DP31) bei einer zweiten Wellenlänge, welche sich von der besagten ersten Wellenlänge unterscheidet, zu beenden,
- eines zweiten abstimmbaren Lasers (TLTXD), um ein neues optisches Datenpaket (DP31'), welches Fülldaten enthält, bei der besagten zweiten Wellenlänge zu erzeugen,
wobei die besagte detektierte Wellenlänge gleich der besagten ersten Wellenlänge oder gleich der besagten zweiten Wellenlänge ist,
- und Übertragen des modifizierten optischen TDM-Signals unter Verwendung einer zweiten optischen Schnittstelle (012).

11. Verfahren nach Anspruch 10,
wobei die besagte detektierte Wellenlänge gleich der besagten ersten Wellenlänge ist.

12. Verfahren nach Anspruch 10,
wobei die besagte detektierte Wellenlänge gleich der besagten zweiten Wellenlänge ist.

13. Verfahren nach Anspruch 10,
weiterhin umfassend:
- Erzeugen von Steuerinformationen, welche anzeigen, dass das besagte neue optische Datenpaket, welches Fülldaten enthält, ein optisches Datenpaket mit Fülldaten ist, unter Verwendung der besagten Steuereinheit (CU).

## Revendications

1. Noeud de réseau optique pour un réseau optique en anneau, comprenant
- une première interface optique (OI1), permettant de recevoir une pluralité de signaux optiques multiplexés par répartition dans le temps (TDM) transportant des séquences de paquets de données optiques respectifs par l'intermédiaire de séquences de créneaux temporels synchrones respectifs, dans lequel lesdits signaux TDM optiques ont des longueurs d'onde respectives différentes,
- un récepteur (RX), permettant de détecter un paquet de données optique à une longueur d'onde détectée dans un créneau temporel (TS1),
- une unité de commande (CU), permettant de recevoir des informations de commande indiquant pour chaque paquet de données optique dudit même créneau temporel (TS1) un noeud de destination respectif, et permettant en outre de commander ledit récepteur (RX) en fonction desdites informations de commande pour détecter ledit paquet de données optique à ladite longueur d'onde détectée dans ledit même créneau temporel (TS1), **caractérisé en ce que**
ladite unité de commande (CU) permet en outre de modifier au moins deux desdits signaux TDM optiques dans ledit même créneau temporel (TS1), en commandant
- une première porte optique (OG1) pour terminer un premier paquet de données optique (DP11) à une première longueur d'onde,
- un premier laser accordable (TLTX) pour générer un nouveau paquet de données optique (DP11') contenant des données de transmission à ladite première longueur d'onde,
- une deuxième porte optique (OG3) pour terminer un deuxième paquet de données optique (DP31) à une deuxième longueur d'onde, qui est différente de ladite première longueur d'onde,
- un deuxième laser accordable (TLTXD) pour générer un nouveau paquet de données optique (DP31') contenant des données fictives à ladite deuxième longueur d'onde,
dans lequel ladite longueur d'onde détectée est égale à ladite première longueur d'onde ou égale à ladite deuxième longueur d'onde,
et dans lequel ledit noeud (ON1) comprend en outre une deuxième interface optique (OI2), permettant de transmettre les signaux TDM optiques modifiés.

2. Noeud de réseau optique selon la revendication 1,
dans lequel ladite longueur d'onde détectée est égale à ladite première longueur d'onde.

3. Noeud de réseau optique selon la revendication 1,
dans lequel ladite longueur d'onde détectée est égale à ladite deuxième longueur d'onde.

4. Noeud de réseau optique selon la revendication 1,
dans lequel ladite unité de commande (CU) permet en outre de générer des informations de commande qui indiquent que ledit nouveau paquet de données optique contenant des données fictives est un paquet de données optique contenant des données fictives.

5. Noeud de réseau optique selon la revendication 2,
dans lequel ladite unité de commande (CU) permet de choisir ladite deuxième longueur d'onde en fonction desdites informations de commande.

6. Noeud de réseau optique selon la revendication 5,
dans lequel ladite unité de commande (CU) permet
- de déduire desdites informations de commande pour chaque paquet optique dudit même créneau temporel une distance de transmission respective sur laquelle le paquet optique respectif a été transmis avant d'atteindre ledit noeud, et
- de choisir ladite deuxième longueur d'onde en fonction des distances de transmission respectives déduites.

7. Noeud de réseau optique selon la revendication 6,
dans lequel ladite unité de commande (CU) choisit ladite deuxième longueur d'onde par rapport à la longueur d'onde à laquelle le paquet de données optique respectif présente la distance de transmission déterminée la plus importante.

8. Noeud de réseau optique selon la revendication 1,
dans lequel ledit deuxième laser accordable (TLTXD) génère un signal de longueur d'onde optique non-modulé à ladite deuxième longueur d'onde, et dans lequel ledit noeud insère ledit signal de longueur d'onde optique non-modulé comme ledit nouveau paquet de données optique contenant des données fictives.

9. Noeud de réseau optique selon la revendication 1,
dans lequel ledit premier laser accordable (TLTXA) génère un premier signal de longueur d'onde optique non-modulé à ladite première longueur d'onde,
dans lequel ledit deuxième laser accordable (TLTXB) génère un deuxième signal de longueur d'onde optique non-modulé à ladite deuxième longueur d'onde,
dans lequel ledit premier laser accordable (TLTXA) et ledit deuxième laser accordable (TLTXB) sont tous les deux couplés optiquement à une même unité de modulation (MOD), qui module ledit premier et ledit deuxième signaux optiques de longueur d'onde non-modulés en fonction des mêmes données de transmission,
et dans lequel ladite unité de commande (CU) fournit des informations de commande, qui indiquent que ledit nouveau paquet de données optique contenant des données fictives contient en fait des données fictives et ne contient pas de données de transmission.

10. Procédé de transmission de données optique dans un réseau optique en anneau, comprenant les étapes suivantes
- recevoir une pluralité de signaux optiques multiplexés par répartition dans le temps (TDM) transportant des séquences de paquets de données optiques respectifs par l'intermédiaire de séquences de créneaux temporels synchrones respectifs, dans lequel lesdits signaux TDM optiques ont des longueurs d'onde respectives différentes, en utilisant une première interface optique (011),
- détecter un paquet de données optique à une longueur d'onde détectée dans un créneau temporel (TS1), en utilisant un récepteur (RX),
- recevoir, au niveau d'une unité de commande (CU), des informations de commande indiquant pour chaque paquet de données optique dudit même créneau temporel (TS1) un noeud de destination respectif,
- commander ledit récepteur (RX) en fonction desdites informations de commande, pour détecter un paquet de données optique à une longueur d'onde détectée respective dans ledit créneau temporel (TS1), en utilisant ladite unité de commande (CU), **caractérisé par** les étapes suivantes
- modifier au moins deux desdits signaux TDM optiques dans ledit même créneau temporel (TS1), en commandant par l'intermédiaire de ladite unité de commande (CU)
- une première porte optique (OG1) pour terminer un premier paquet de données optique (DP11) à une première longueur d'onde,
- un premier laser accordable (TLTX) pour générer un nouveau paquet de données optique (DP11') contenant des données de transmission à ladite première longueur d'onde,
- une deuxième porte optique (OG3) pour terminer un deuxième paquet de données optique (DP31) à une deuxième longueur d'onde, qui est différente de ladite première longueur d'onde,
- un deuxième laser accordable (TLTXD) pour générer un nouveau paquet de données optique (DP31') contenant des données fictives à ladite deuxième longueur d'onde,
dans lequel ladite longueur d'onde détectée est égale à ladite première longueur d'onde ou égale à ladite deuxième longueur d'onde,
- et transmettre les signaux TDM optiques modifiés, en utilisant une deuxième interface optique (012).

11. Procédé selon la revendication 10,
dans lequel ladite longueur d'onde détectée est égale à ladite première longueur d'onde.

12. Procédé selon la revendication 10,
dans lequel ladite longueur d'onde détectée est égale à ladite deuxième longueur d'onde.

13. Procédé selon la revendication 10,
comprenant en outre l'étape suivante
- générer des informations de commande qui indiquent que ledit nouveau paquet de données optique contenant des données fictives est un paquet de données optique contenant des données fictives, en utilisant ladite unité de commande (CU).
